# DEMANDE DE BREVET EUROPEEN

(11) **EP 1 108 459 A1**
(43) Date de publication de la demande: **20.06.2001**
(21) Numéro de dépôt: 00403299.1
(22) Date de dépôt: 24.11.2000
(51) Int. Cl.: B01D 53/22, B01D 63/04

(54) **Installation de perméation**

(30) Priorité: 14.12.1999 FR 9915755
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Monereau, Christian, 75011 Paris (FR); Phelut, Serge, 94500 Champigny sur Marne (FR)
(74) Mandataire: Le Moenner, Gabriel

(57) **Abrégé**

L'invention concerne une installation de perméation, comprenant :
- une unique enceinte (30) de résistance à la pression,
- une pluralité de modules de perméation (34, 36) disposés à l'intérieur de ladite enceinte, chaque module étant constitué par au moins un perméateur formé de fibres creuses à paroi poreuse et étant disposé à l'intérieur d'une enveloppe (38) munie de perforations mettant en communication la partie externe de chaque module et le circuit gazeux commun,
- des moyens (32) pour alimenter ladite installation avec le mélange gazeux à traiter,
- des moyens (46) pour recueillir la fraction du mélange gazeux ayant traversé la paroi desdites fibres ; et
- des moyens (44) pour recueillir la fraction du mélange gazeux n'ayant pas traversé la paroi desdites fibres.

## Description

La présente invention concerne les installations de perméation.

La technique ou procédé de perméation permet la séparation d'un gaz dans un mélange de gaz en phase gazeuse à l'aide de parois poreuses. Cette technique consiste à appliquer sous une pression relativement élevée de l'ordre de quelques dizaines de bars le mélange gazeux dans l'environnement d'un faisceau de fibres creuses réalisées à partir de polymère d'un type particulier. Sous l'effet de la pression et en raison de la nature du matériau les molécules d'un des gaz seront adsorbées de façon privilégiée par le matériau constituant les fibres creuses, traverseront les pores de ces fibres poreuses et seront récupérées par désorption à l'intérieur du canal de très faible dimension existant dans ces fibres. En revanche, le gaz ou les gaz correspondant aux autres molécules ne traverse pas ou traverse peu la paroi poreuse et demeure à l'extérieur du faisceau des fibres poreuses creuses.

Dans certains modes de réalisation, un débit de gaz dit de balayage, de composition différente du perméat, est introduit à l'intérieur des fibres, du côté opposé à celui de la récupération du perméat. Cette injection a pour but d'augmenter le rendement de récupération du gaz traversant préférentiellement les fibres.

Ce mode de réalisation complexifie quelque peu la technologie des perméateurs et n'est pas décrit par la suite. L'invention peut également s'appliquer à ce type de réalisation.

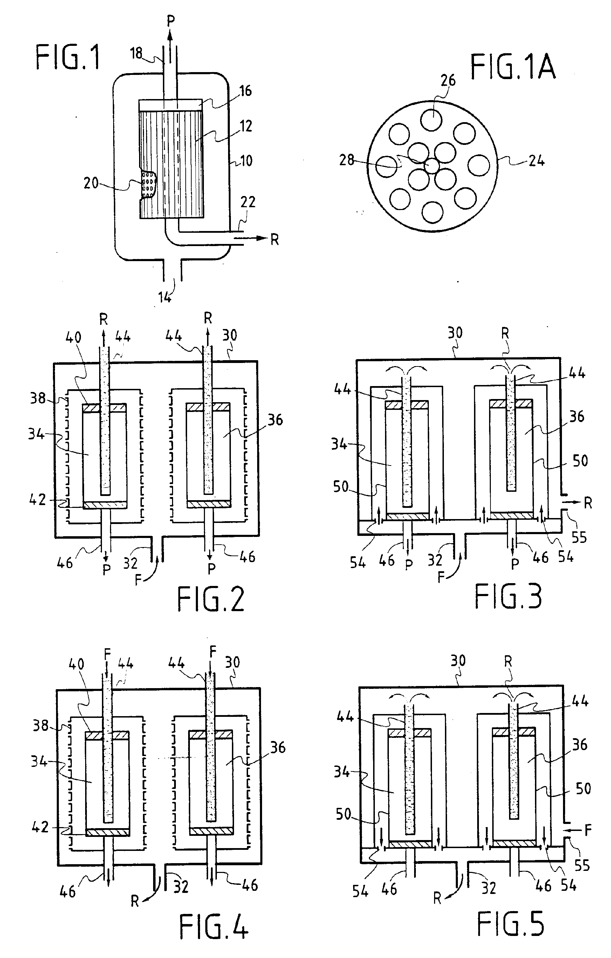

Sur la figure 1 annexée, on a représenté schématiquement un perméateur. Il comprend une enceinte externe de résistance à la pression 10 à l'intérieur de laquelle est monté un faisceau 12 de fibres creuses poreuses. Le mélange de gaz est introduit par la buse 14 disposée à l'extrémité inférieure de l'enceinte 10. Le gaz sous pression entoure le faisceau de fibres creuses. La fraction du gaz qui traverse la paroi poreuse pénètre dans les canaux des fibres et est recueillie à une extrémité de celles-ci dans une chambre 16, celle-ci étant reliée à une conduite 18 de sortie de la fraction du mélange gazeux ayant traversé la paroi des fibres et qui sera ultérieurement appelée perméat et repérée par la lettre P. En revanche, la fraction du mélange gazeux qui n'a pas traversé la paroi des fibres est recueillie de préférence par un tube muni de perforations 20 qui s'étend axialement selon le faisceau de fibres 12. Cette fraction du mélange gazeux sort de l'enceinte 10 par la buse 22 raccordée au tube perforé 20. La fraction du mélange gazeux n'ayant pas traversé la paroi des fibres creuses sera ultérieurement appelée non perméat et repérée par la lettre R.

Dans un autre type de réalisation, le mélange gazeux est introduit via le tube central 22 et le non-perméat est recueilli dans l'enceinte 20.

Comme on l'a déjà indiqué, la pression du mélange gazeux est relativement élevée, typiquement de l'ordre de quelques dizaines de bars. Il est donc nécessaire que l'enceinte externe de résistance à la pression 10 présente une paroi d'épaisseur relativement importante et les différentes buses telles que 18 et 22 traversant cette paroi doivent également être réalisées de façon précise pour maintenir la résistance à la pression de l'enceinte 10.

On comprend qu'il est donc intéressant de disposer plusieurs perméateurs 12 à l'intérieur d'une même enceinte de résistance à la pression 10. Cela a déjà été proposé notamment dans le document US-A-4 874 405, qui décrit un module de perméation constitué par plusieurs perméateurs individuels disposés les uns au-dessus des autres, ces perméateurs étant disposés dans une même enceinte de résistance à la pression.

Cependant, il apparaît, pour des raisons à la fois techniques et économiques, qu'il est difficile de disposer plus de trois perméateurs les uns au-dessus des autres à l'intérieur d'une même enceinte. Or, il existe un certain nombre de situations dans lesquelles on souhaite pouvoir traiter des volumes de mélange gazeux avec des débits relativement importants qui ne sont pas compatibles avec l'utilisation de trois perméateurs disposés les uns au-dessus des autres.

Pour résoudre ce problème, on pourrait envisager de disposer à l'intérieur d'une même enceinte de pression (référencée 24 sur la figure 1a annexée), plusieurs ensembles de perméation, tels que 26 disposés les uns à côté des autres. Sur cette figure 1a, on a également représenté la buse 28 d'entrée du mélange gazeux à traiter dans l'enceinte de pression 24. Or, il est important dans une telle installation que chaque module de perméation soit alimenté par un débit de mélange gazeux prédéterminé, le fait de s'écarter de ce débit entraînant une chute très importante du rendement de l'installation. Pour résoudre ce problème, on pourrait envisager de disposer les différents modules de perméation 26 dans une enceinte de résistance à la pression 24 de grande dimension de telle manière que les débits pour chaque module de perméation soit sensiblement les mêmes. On comprend cependant qu'une telle solution est inacceptable car elle conduit à une augmentation très sensible du coût de l'installation en raison des dimensions importantes de l'enceinte 24 de résistance à la pression et donc en particulier d'augmentation de l'épaisseur de la paroi de cette enceinte.

Un objet de la présente invention est de fournir une installation de perméation dans laquelle plusieurs perméateurs ou plusieurs modules de perméation sont disposés les uns à côté des autres à l'intérieur d'une unique enceinte de résistance à la pression dont la dimension est réduite tout en permettant d'obtenir un rendement global élevé de cette installation.

Pour atteindre ce but, selon l'invention, l'installation de perméation comprend :
- une unique enceinte de résistance à la pression,
- au moins deux modules de perméation disposés à l'intérieur de ladite enceinte, chaque module étant constitué par au moins un perméateur formé de fibres creuses à paroi poreuse et étant disposé à l'intérieur d'une enveloppe munie de perforations mettant en communication la partie externe de chaque module et le circuit gazeux commun,
- des moyens pour alimenter ladite installation avec un mélange gazeux à traiter,
- des moyens pour recueillir la fraction du mélange gazeux ayant traversé la paroi desdites fibres ;
- des moyens pour recueillir la fraction du mélange gazeux n'ayant pas traversé la paroi desdites fibres.

On comprend que grâce à l'interposition des enveloppes perforées constituant des pertes de charge dans le circuit gazeux commun, on alimente les modules avec des débits sensiblement égaux pour les différents modules et avec une bonne distribution des flux pour chaque module, permettant ainsi le fonctionnement optimal de chaque module de perméation et par là le fonctionnement optimal de l'unité. On comprend en outre que ces enveloppes perforées sont disposées à l'interface de deux milieux gazeux dont les pressions ne sont pas très différentes. Ces enveloppes peuvent donc avoir une construction mécaniquement relativement simple.

Selon un premier mode de mise en oeuvre, les perforations sont interposées dans le circuit d'alimentation en mélange gazeux des modules de perméation. Selon un deuxième mode de mise en oeuvre, les perforations sont interposées dans le circuit de récupération de la fraction du mélange gazeux n'ayant pas traversé les parois des fibres des perméateurs (non-perméat).

On comprend que, dans les deux cas, la perte de charge qui en résulte permet d'égaliser sensiblement le débit gazeux dans tous les modules de perméation.

Selon un premier mode de réalisation de l'installation, chaque module de perméation a une forme générale cylindrique, chaque enveloppe a une forme cylindrique entourant ledit module de perméation sur toute sa longueur axiale et ladite enveloppe cylindrique est perforée dans sa partie latérale et est fermée à chacune de ses extrémités par une paroi fermée.

Selon un deuxième mode de réalisation de l'invention, chaque module de perméation a une forme générale cylindrique, chaque module de perméation est entouré sur toute sa longueur par une paroi pleine cylindrique et une plaque pleine obture une extrémité de la paroi pleine cylindrique, une autre plaque d'extrémité présentant lesdites perforations.

De préférence, la perte de charge créée par lesdites perforations est comprise entre 10 et 90% de la perte de charge totale entre l'entrée de l'installation et la sortie de la fraction du mélange gazeux n'ayant pas traversé la paroi des fibres et de préférence entre 15 et 60%.

D'autres caractéristiques et avantages de l'invention apparaîtront mieux à la lecture de la description qui suit de plusieurs modes de réalisation de l'invention donnés à titre d'exemples non limitatifs. La description se réfère aux figures annexées sur lesquelles :
- la figure 1 déjà décrite montre de façon schématique un perméateur de l'art antérieur ;
- la figure 1a déjà décrite montre de façon simplifiée un perméateur envisageable à plusieurs modules de perméation disposés côte à côte ;
- la figure 2 est une vue simplifiée d'un premier mode de réalisation d'une installation de perméation selon l'invention ;
- la figure 3 montre de façon simplifiée un deuxième mode de réalisation de l'installation de perméation ;
- la figure 4 montre de façon simplifiée un troisième mode de réalisation de l'installation de perméation ;
- la figure 5 montre de façon simplifiée un quatrième mode de réalisation de l'installation de perméation ;
- la figure 6 montre en coupe verticale un exemple détaillé de réalisation de l'installation de perméation conformément aux modes de réalisation de la figure 3 ;
- la figure 6a est une vue en coupe selon la ligne A-A de la figure 6 ;
- la figure 7 est une vue partielle de la figure 6 montrant la récupération du perméat et du non-perméat dans un module de perméation ; et
- la figure 7a est une vue en coupe selon la ligne A-A de la figure 7.

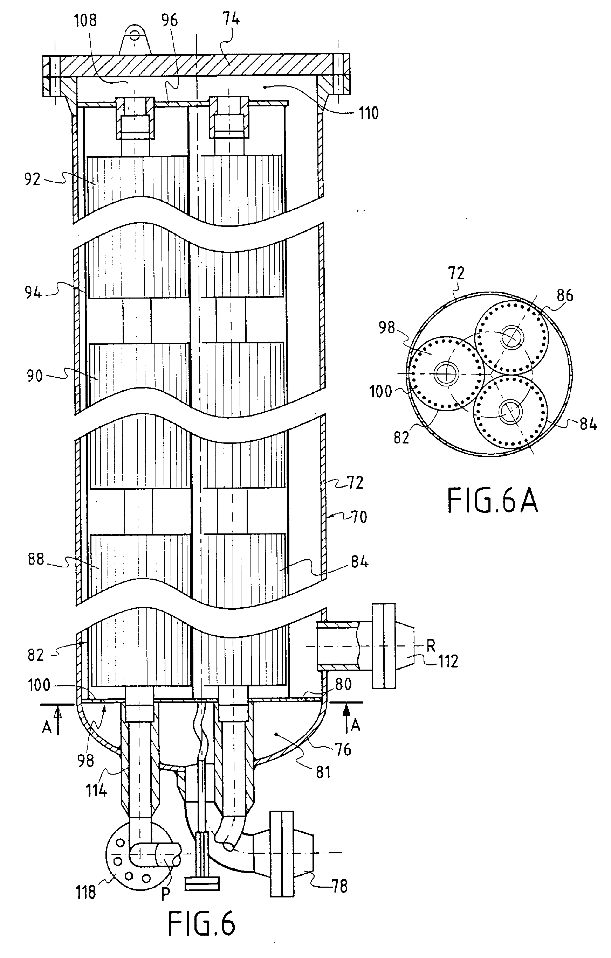

Une installation de perméation selon l'invention peut appartenir à quatre types différents, d'une part, selon que l'enveloppe est perforée dans sa partie latérale (figures 2 et 4) ou à une de ses extrémités (figures 3 et 5) et d'autre part, selon la position des enveloppes perforées par rapport aux différents flux de gaz, l'enveloppe perforée étant interposée dans le mélange gazeux à traiter (figures 2 et 3) ou dans le flux de non-perméat (figures 4 et 5).

En se référant tout d'abord à la figure 2, on va décrire un premier mode de réalisation de l'installation de perméation. Sur cette figure simplifiée, on a représenté l'enceinte 30 de résistance à la pression équipée de sa buse 32 d'introduction du mélange gazeux F. Sur cette figure, on a représenté également deux perméateurs 34 et 36 qui pourraient également être des modules de perméation constitués par plusieurs perméateurs montés les uns au-dessus des autres. Chaque module de perméation 34, 36 est placé à l'intérieur d'une enveloppe constituée par une paroi cylindrique 38 qui s'étend sur toute la hauteur du module de perméation et qui est obturée à ses extrémités par deux plaques 40 et 42. La paroi latérale 38 est perforée avec des perforations de diamètres calibrés alors que les plaques 40 et 42 sont pleines. De façon schématique, on a représenté également les tubulures 44 de récupération du non-perméat R et les tubulures 46 de récupération du perméat P recueilli à l'intérieur des fibres creuses constituant les perméateurs 34, 36.

On comprend que grâce à la perte de charge constituée par les perforations 38, les différents perméateurs ou modules de perméation 34, 36 peuvent être alimentés avec un même débit parfaitement défini quelle que soit la perte de charge des différents trajets allant de la buse d'introduction du mélange gazeux 32 aux perméateurs 34, 36. On comprend également que la pression à l'intérieur de l'enveloppe constituée par les parois latérales 38 et les plaques d'extrémité 40 et 42 est peu inférieure à la pression du mélange gazeux dans l'enceinte 30 à l'extérieur des enveloppes 38. Ces enveloppes 38 peuvent donc avoir une épaisseur réduite et très inférieure à l'épaisseur de l'enceinte externe 30.

La figure 3 montre de façon simplifiée un deuxième exemple de réalisation de l'installation de perméation. Celle-ci comporte toujours l'enceinte externe de pression 30 avec sa buse 32 d'introduction du mélange gazeux à traiter sous pression. On retrouve les perméateurs ou modules de perméation 34 et 36. Ceux-ci sont disposés dans des enveloppes individuelles constituées par une paroi cylindrique 50 s'étendant sur toute la hauteur du module de perméation, cette paroi 50 étant pleine. Une première extrémité de la paroi latérale 50 est obturée par une plaque 52 pleine alors que sa deuxième extrémité est obturée par une plaque 54 munie de perforations de dimensions calibrées. Il en va de même pour tous les perméateurs ou modules de perméation contenus dans l'enceinte. On comprend que, comme dans le premier mode de réalisation, les plaques perforées 54 divisent le flux entrant et constituent des pertes de charge que l'on peut adapter avec une grande précision pour obtenir pour chaque module de perméation un même débit correspondant au fonctionnement optimal du module de perméation. Comme dans le cas du premier mode de réalisation, les enveloppes 50, 52, 54 peuvent être réalisées avec une épaisseur relativement réduite puisque la pression sur leurs deux faces est sensiblement la même. Le non-perméat R est récupéré par les tubes 44 et il sort de l'enceinte 30 par la buse 55.

Dans le mode de réalisation représenté sur la figure 4, l'installation a la même structure que celle de la figure 2. La différence réside dans la circulation des différents flux gazeux. Le mélange gazeux à traiter F est introduit dans les perméateurs par les tubes intérieurs 44 alors que le non-perméat R est récupéré par la buse 32 de sortie d'enveloppe 30. L'enveloppe perforée (38, 40, 42) est disposée dans le flux du non-perméat R sortant des perméateurs.

Selon le mode de réalisation de la figure 5, l'installation a la même structure que celle de la figure 3. Seule est modifiée la circulation des différents flux gazeux. Le mélange gazeux à traiter F est introduit dans l'enceinte 30 par la buse 55 et le non-perméat R est récupéré par la buse 32 après qu'il ait traversé les perforations des plaques 54.

Il va de soi que le nombre de perméateurs ou de modules de perméation est typiquement supérieur à deux comme on l'a représenté par simplification sur les figures 2 à 5. Ce nombre peut être égal à 3, 5 ou 7 ce qui permet de bien "remplir" l'intérieur de l'enceinte 30.

On comprend que quel que soit le mode de réalisation considéré, la perte de charge créée par chaque enveloppe perforée interposée entre la buse d'introduction du mélange dans l'enceinte et chaque module de perméation ou entre chaque perméateur et la buse de récupération du non-perméat, permet de définir très précisément le débit en circulation à travers chaque module de perméation. On comprend également que cette perte de charge puisse être définie de telle manière qu'elle soit très supérieure à la perte de charge résultant de la circulation normale du mélange gazeux à l'intérieur de l'enceinte de résistance à la pression et à l'extérieur des enveloppes entourant chaque module de perméation. On peut ainsi disposer un certain nombre de modules de perméation les uns à côté des autres dans une enceinte de résistance à la pression de dimensions réduites. On comprend également que la pression de part et d'autre des plaques perforées est relativement identique et que ces plaques peuvent être donc réalisées à l'aide d'une tôle d'épaisseur relativement réduite également.

De préférence, la perte de charge créée par les enveloppes perforées est comprise entre 10 et 90% de la perte de charge totale entre l'entrée de l'installation et la sortie du non-perméat. De préférence, cette perte de charge est comprise entre 15 et 60%.

On peut également indiquer que, de préférence, la surface totale des perforations représente de 0,1 à 3 fois la section de la buse d'alimentation en mélange gazeux (figures 2 et 3) ou cette même proportion de la section de la buse de sortie du non-perméat (figures 4 et 5). De préférence encore, ces fourchettes sont comprises entre 0,5 et 2 fois la section de la buse.

Les perforations peuvent également être déterminées par la perforation que leur surface totale représente par rapport à la surface totale de l'enveloppe perforée. Cette proportion est de préférence inférieure à 10% et de préférence encore inférieure à 1%.

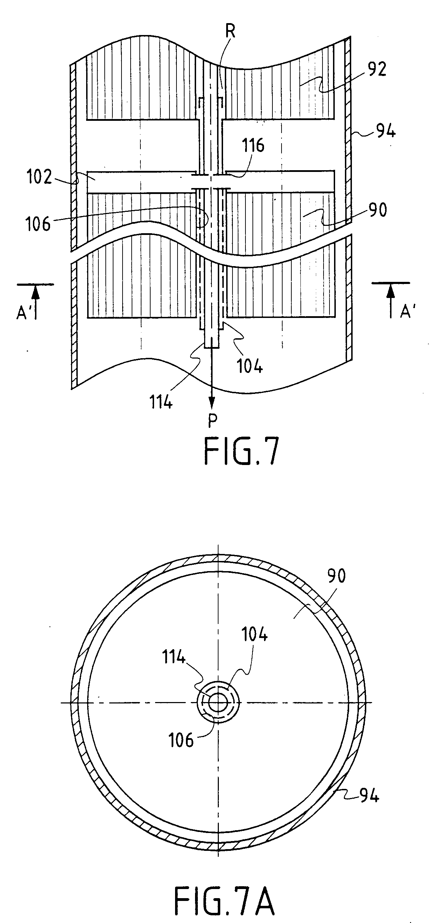

En se référant maintenant aux figures 6 et 7, on va décrire plus en détail un mode préféré de réalisation de l'installation de perméation selon le principe montré par la figure 3.

Sur la figure 6, on a représenté l'enceinte externe de résistance à la pression 70 de l'installation de perméation qui est constituée par une paroi latérale cylindrique 72, par un couvercle boulonné 74 et par un fond en forme de calotte sphérique 76.

Le fond 76 de l'enceinte de pression est équipé d'une buse 78 pour l'introduction du mélange gazeux à traiter. La partie inférieure de l'enceinte est séparée du reste de celle-ci par une plaque 80 qui définit ainsi, à l'extrémité inférieure de l'enceinte, une chambre d'alimentation unique 81. Sur cette figure, on a également représenté deux modules de perméation 82 et 84, la vue en coupe de la figure 6a montrant que l'installation comporte en fait un troisième module de perméation 86. Chaque module de perméation comprend trois perméateurs unitaires référencés de façon générique 88, 90 et 92 disposés en série les uns au-dessus des autres. Chaque module de perméation est entouré sur toute sa longueur par une enveloppe cylindrique 94 dont l'extrémité supérieure est obturée par une plaque 96 et dont l'extrémité inférieure est obturée par une plaque perforée inférieure 98 qui est raccordée de façon étanche à la plaque 80 ou qui en fait partie intégrante. Ainsi, les perforations telles que 100 des plaques perforées 98 débouchent directement dans la chambre d'alimentation 81 et permettent ainsi de créer une perte de charge entre la buse d'introduction 78 et chaque module de perméation 82, 84 et 86. Comme le montre mieux la figure 6a, les perforations sont de préférence disposées sur un même cercle par rapport à l'axe longitudinal des modules de perméation, permettant ainsi de réaliser une circulation homogène sur tout le pourtour du module.

Le recueil du perméat P et du non-perméat R sera mieux compris en se reportant aux figures 7 et 7a sur lesquelles on a représenté une partie d'un module de perméation. Plus précisément sur la figure 7, on a représenté par exemple le perméateur 90 et le perméateur 92 du module de perméation 82. On a représenté également l'enveloppe 94. A l'extrémité supérieure du faisceau de fibres creuses constituant le perméateur 90 on trouve une chambre annulaire 102 de recueil du perméat dans les fibres creuses. Le recueil du non-perméat est réalisé par un tube perforé 104 qui est placé dans un passage axial 106 de chaque perméateur. Le tube perforé permet donc de recueillir le non-perméat qui arrive à l'extrémité supérieure 108 du tube perforé 104 au-dessus des plaques 96 obturant les enveloppes 94 entourant chaque module de perméation. Le non-perméat arrive ainsi dans l'espace supérieur 110 de l'enceinte externe et redescend dans les espaces verticaux limités d'une part par la paroi latérale cylindrique 72 de l'enceinte externe et d'autre part par les enveloppes 94 des modules de perméation. Le non-perméat R est recueilli par la buse de sortie 112 disposée à l'extrémité inférieure de la paroi latérale cylindrique 72 au-dessus de la plaque 80.

On comprend que grâce à cette disposition, l'ensemble des modules de perméation est entouré par une circulation de gaz correspondant au non-perméat qui se trouve également le long de la paroi externe de l'installation de perméation. Cette circulation permet de maintenir une température très homogène dans le fonctionnement des modules en supprimant tout contact entre le gaz à traiter et le milieu extérieur généralement à une température sensiblement inférieure et d'obtenir ainsi des performances optimales.

Si l'on revient à la figure 7, on voit que le recueil du perméat est réalisé par un tube axial 114 introduit dans le tube perforé 104. Au niveau de chaque chambre 102 de récupération du perméat, des tubulures 116 relient le tube 114 aux chambres 102. L'extrémité supérieure du tube 114 est obturée alors que son extrémité inférieure traverse la partie bombée 76 de l'enveloppe externe pour être raccordée à des buses 118.

Les installations de perméation conformes à l'invention peuvent trouver de nombreuses applications notamment l'épuration d'hydrogène.

Le perméat est alors l'hydrogène dont on veut que la pureté soit supérieure à 80% en moles du perméat total et, de préférence encore, supérieure à 85%. L'installation fonctionne à une température comprise entre 40 et 120°C.

Une autre application consiste dans l'obtention d'un mélange de composition prédéterminée d'hydrogène et d'un gaz choisi parmi CO, N₂, Ar, CO₂ et He. Dans ce cas, le mélange est le non-perméat R. L'installation fonctionne à une température comprise entre 60 et 95°C.

## Revendications

1. Installation de perméation comprenant :
- une unique enceinte de résistance à la pression,
- au moins deux modules de perméation disposés à l'intérieur de ladite enceinte, chaque module étant constitué par au moins un perméateur formé de fibres creuses à paroi poreuse et étant disposé à l'intérieur d'une enveloppe munie de perforations mettant en communication la partie externe de chaque module et le circuit gazeux commun,
- des moyens pour alimenter ladite installation avec un mélange gazeux à traiter,
- des moyens pour recueillir la fraction du mélange gazeux ayant traversé la paroi desdites fibres ; et
- des moyens pour recueillir la fraction du mélange gazeux n'ayant pas traversé la paroi desdites fibres.

2. Installation de perméation selon la revendication 1, caractérisée en ce que ledit circuit gazeux commun est le circuit de gaz à traiter.

3. Installation de perméation selon la revendication 1, caractérisée en ce que ledit circuit commun est celui de la fraction du mélange gazeux n'ayant pas traversé la paroi desdites fibres.

4. Installation de perméation selon l'une des revendications 1 à 3, caractérisée en ce que lesdites perforations créent des pertes de charge sensiblement égales entre ledit circuit gazeux commun et chaque module de perméation.

5. Installation de perméation selon l'une des revendications 1 à 4, caractérisée en ce que la perte ce charge créée par lesdites perforations est comprise entre 10 et 90% de la perte de charge totale entre l'entrée de l'installation et la sortie de la fraction du mélange gazeux n'ayant pas traversé la paroi des fibres et de préférence entre 15 et 60%.

6. Installation de perméation selon l'une des revendications 1 à 5, caractérisée en ce que chaque module de perméation a une forme générale cylindrique, en ce que chaque enveloppe a une forme cylindrique entourant ledit module de perméation sur toute sa longueur axiale et en ce que ladite enveloppe cylindrique est perforée dans sa partie latérale et est fermée à chacune de ses extrémités par une paroi fermée.

7. Installation de perméation selon l'une des revendications 1 à 5, caractérisée en ce que chaque module de perméation a une forme générale cylindrique, en ce que chaque module de perméation est entouré sur toute sa longueur par une paroi pleine cylindrique et en ce que une plaque pleine obture une extrémité de la paroi pleine cylindrique, une autre plaque d'extrémité présentant lesdites perforations.

8. Installation de perméation selon l'une des revendications 1 à 7, caractérisée en ce que chaque module de perméation comprend une pluralité de modules de perméation de forme générale cylindrique disposés les uns au-dessus des autres verticalement selon leur axe commun, lesdits perméateurs étant alimentés en parallèle à partir de ladite enveloppe perforée.

9. Installation de perméation selon l'une des revendications 5 et 7, caractérisée en ce que :
- ladite enceinte de résistance à la pression est sensiblement cylindrique à l'axe vertical,
- ladite entrée de mélange gazeux est disposée à l'extrémité inférieure de l'enceinte de résistance à la pression, la partie inférieure de l'intérieur de l'enceinte de pression étant séparée par une cloison horizontale du reste de l'intérieur de l'enceinte pour former une chambre dans laquelle débouche ladite entrée unique de mélange gazeux, lesdites plaques perforées sont disposées à l'extrémité inférieure desdits modules de perméation et sont raccordées de façon étanche à ladite cloison par quoi les perforations desdites plaques perforées débouchent dans ladite chambre, et en ce que chaque module de perméation est entouré par une paroi pleine sensiblement cylindrique dont l'extrémité inférieure est raccordée de façon étanche à une desdites plaques perforées et dont l'extrémité supérieure est obturée.

10. Installation de perméation selon la revendication 9, caractérisée en ce que lesdits moyens pour recueillir la fraction du mélange gazeux n'ayant pas traversé les parois desdites fibres comprennent une pluralité de tubes perforés disposés selon l'axe de chacun des modules de perméation et s'étendant sur toute la longueur desdits modules, l'extrémité inférieure de chaque tube perforé étant obturée, l'extrémité supérieure de chaque tube perforé traversant l'extrémité supérieure obturée d'une des parois pleines sensiblement cylindrique, et une buse de sortie de ladite fraction du mélange gazeux n'ayant pas traversé la paroi desdites fibres, ladite buse étant disposée dans l'extrémité unique au-dessus de la cloison limitant ladite chambre, par quoi ladite fraction du mélange gazeux n'ayant pas traversé la paroi des fibres circule dans l'espace limité par ladite enceinte unique de pression et lesdites parois pleines sensiblement cylindriques depuis l'extrémité supérieure de ladite enceinte jusqu'à ladite buse de sortie disposée à proximité de l'extrémité inférieure de l'enceinte.

11. Installation de perméation selon l'une des revendications 1 et 2, caractérisée en ce que la surface totale des enveloppes représente de 0,1 à 3 fois la section de la buse d'alimentation de l'installation en gaz à traiter et de préférence de 0,5 à 2 fois la section de ladite buse.

12. Installation de perméation selon l'une des revendications 1 et 3, caractérisée en ce que la surface totale des perforations des enveloppes représente de 0,1 à 3 fois la section de la buse de sortie de la fraction du mélange gazeux n'ayant pas traversé la paroi desdites fibres, et de préférence de 0,5 à 2 fois la section de ladite buse.

13. Installation de perméation selon l'une des revendications 1 à 4, caractérisée en ce que la surface totale des perforations d'une enveloppe est inférieure à 10% et de préférence inférieure à 1%, de la surface totale de l'enveloppe perforée.

14. Application de l'installation selon l'une des revendications 1 à 13, à l'élaboration d'hydrogène présentant une pureté supérieure à 80% en moles, et de préférence supérieure à 85%, l'hydrogène étant la fraction du mélange gazeux qui traverse la paroi desdites fibres.

15. Application de l'installation selon l'une quelconque des revendications 1 à 13, à l'élaboration d'un mélange gazeux H₂ + A, A étant choisi dans le groupe comprenant CO, N₂, Ar, CO₂ et He, ledit mélange étant la fraction du mélange gazeux ne traversant pas la paroi desdites fibres.
